# EUROPÄISCHE PATENTSCHRIFT

(11) **EP 1 614 334 B1**
(45) Veröffentlichungstag und Bekanntmachung des Hinweises auf die Patenterteilung: **26.03.2008**
(21) Anmeldenummer: 04029225.2
(22) Anmeldetag: 09.12.2004
(51) Int. Cl.: A01B 29/04

(54) **Ackerwalze**
Compacting roller
Rouleau de travail du sol

(30) Priorität: 07.07.2004 DE 202004010697 U
(43) Veröffentlichungstag der Anmeldung: 11.01.2006
(73) Patentinhaber: Willi Auf der Landwehr, 33397 Rietberg (DE)
(72) Erfinder: Willi Auf der Landwehr, 33397 Rietberg (DE)
(74) Vertreter: Wiebusch, Manfred

(56) Entgegenhaltungen:
- EP-A- 0 379 672
- DE-A1- 4 225 944
- US-A- 2 040 710
- US-A- 2 525 545

## Beschreibung

Die Erfindung betrifft eine Ackerwalze mit abwechselnd angeordneten Arbeitsringen und Glattringen, bei der die Arbeitsringe in bezug auf die Glattringe mit radialem und axialem Spiel und frei drehbar angeordnet sind und einen vom Außendurchmesser der Glattringe verschiedenen Außendurchmesser aufweisen.

Eine Ackerwalze dieser Art ist aus US-A-2 525 545 bekannt.

Eine ähnliche Walze zeigt DE 42 25 944 C2. Die Glattringe werden dort durch separate, scheibenförmige Ringe aus Gußeisen gebildet, die auf einer gemeinsamen Achse angeordnet sind. Die Arbeitsringe weisen jeweils eine Nabe auf, die zwischen zwei Glattringen lose auf der Achse sitzt und deren Innendurchmesser größer ist als der Außendurchmesser der Achse, so daß die Arbeitsringe auf der Achse axiales Spiel haben. Im äußeren Umfangsbereich weisen die Arbeitsringe abwechselnd nach entgegengesetzten Seiten weisende Vorsprünge auf, deren Kontur etwa komplementär zu der Kontur der Zwischenräume zwischen den Glattringen ist, ohne jedoch diese Zwischenräume vollständig auszufüllen. Aufgrund ihres vom Durchmesser der Glattringe abweichenden Außendurchmessers verdrehen sich die Arbeitsringe während des Betriebs der Ackerwalze relativ zu den Glattringen, und sie führen dabei aufgrund ihres axialen und radialen Spiel eine irreguläre taumelnde Bewegung aus, so daß sie mit ihren Vorsprüngen die Zwischenräume zwischen den Glattringen ausräumen. Durch die gekreuzt zur Umfangsrichtung stehenden Vorsprünge der Arbeitsringe wird eine gute Bearbeitung von trokkenen Böden erreicht, und bei bindigen Böden verhindern die Arbeitsringe ein Anhaften des Bodens an den Glattringen.

Andererseits sind aus der Praxis sogenannte Keilringwalzen bekannt, die einen durchgehenden Walzenkörper mit einer gewellten Oberfläche aus Gummi aufweisen. Die Wellenberge bilden an der Oberfläche des Walzenkörpers umlaufende Wülste, mit denen die Walze auf dem Boden abrollt. Zum Ausräumen von Bodenresten aus den Wellentälern zwischen den Wülsten sind am Walzengestell stationäre Abstreifer vorgesehen. Hier besteht jedoch die Gefahr, daß die Oberfläche der Gummiwalze und die Abstreifer durch erhöhten Abrieb und/oder durch eingeklemmte Steine beschädigt werden.

Aufgabe der Erfindung ist es, eine Ackerwalze der eingangs genannten Art zu schaffen, mit der die Bodenbearbeitung insbesondere bei bindigen Böden weiter verbessert wird.

Diese Aufgabe wird erfindungsgemäß dadurch gelöst, das die Arbeitsringe jeweils ein Oval bilden.

Dadurch variiert die Weite, um die sich die Arbeitsringe von der Trägerwalze radial abheben, so daß die Zwischenräume zwischen den Wülsten der Walze durch die Arbeitsringe noch besser ausgeräumt werden. Außerdem ergeben sich größere Unterschiede in der Bewegung von benachbarten Arbeitsringen. Dies hat den Vorteil, daß von zwei benachbarten Arbeitsringen erfaßte größere Bodenschollen besser auseinandergerissen werden. Vorteilhaft ist außerdem, daß durch das ungleichmäßige Abrollen der ovalen Arbeitsringe auf dem Boden die Bodenbearbeitung intensiviert wird.

Die Arbeitsringe liegen bei der erfindungsgemäßen Walze lose in den Wellentälern zwischen den Glattringen. Da die Glattringe jedoch eine durchgehende Walze bilden und nur durch sanfte Täler voneinander getrennt sind, gibt es hier zwischen den Glattringen keine tiefen, bis an die Drehachse heranreichenden Zwischenräume zwischen den Glattringen, in denen sich Bodenreste festsetzen könnten und die sich nur schwer reinigen ließen. Auf diese Weise wird insbesondere bei bindigen Böden die Bodenbearbeitung erheblich verbessert. Ein weiterer Vorteil besteht darin, daß die Arbeitsringe einen großen Innendurchmesser aufweisen, größer als der Außendurchmesser der Trägerwalze im Bereich der Wellentäler, so daß die Arbeitsringe einen einfachen Aufbau und ein geringes Gewicht aufweisen können und nur einen geringen Materialbedarf erfordern.

Gegenüber einer Keilringwalze besteht der wesentliche Vorteil darin, daß die Zwischenräume zwischen den Wülsten der Walze durch die frei beweglichen Arbeitsringe schonender ausgeräumt werden und daß kaum die Gefahr besteht, daß sich Steine zwischen den beweglichen Arbeitsringen und der Walze verklemmen. Außerdem wird durch die Arbeitsringe eine aus Erosionsschutzgründen erwünschte rauhere Bodenstruktur erreicht. Der Umstand, daß die Arbeitsringe einen großen Innendurchmesser haben und sich somit auf einer relativ großen Berührungsfläche auf der Trägerwalze abstützen, trägt zur Verminderung des Verschleißes bei. Auch das vergleichsweise geringe Trägheitsmoment der Arbeitsringe wirkt sich günstig auf die Verschleiß- und Bodenbearbeitungseigenschaften aus.

Vorteilhafte Ausgestaltungen und Weiterbildungen der Erfindung ergeben sich aus den Unteransprüchen.

Bevorzugt ist die Trägerwalze oder zumindest deren Oberflächenschicht aus einem Polymermaterial hergestellt, beispielsweise aus einem Gummimaterial, wie es auch für die bekannten Keilringwalzen verwendet wird.

Die Arbeitsringe sind vorzugsweise an mindestens einer Stelle ihres Umfangs geteilt, so daß sie sich auf der Trägerwalze montieren lassen, obwohl ihr Innendurchmesser in der Gebrauchsstellung kleiner ist als der Außendurchmesser der Wülste der Trägerwalze. Beispielsweise sind die Arbeitsringe jeweils aus zwei oder mehr Segmenten zusammengesetzt, die durch Schrauben oder dergleichen miteinander verbunden sind. In einer besonders bevorzugten Ausführungsform handelt es sich bei den Segmenten der Arbeitsringe um Spritzgußteile aus Kunststoff, beispielsweise aus Polyamid. Dies hat zugleich den Vorteil, daß gekreuzt zur Umfangsrichtung stehende Vorsprünge der Arbeitsringe in einem Stück angespritzt werden können.

Sofern die beispielsweise aus Kunststoff hergestellten Arbeitsringe hinreichend elastisch sind, genügt es auch, sie an nur einer Stelle ihrer Umfangs zu teilen, so daß sie sich vorübergehend elastisch aufweiten und bei der Montage axial über die Wülste der Trägerwalze hinwegschieben lassen. Wahlweise können die Arbeitsringe auch durch flexible, zu einem Ring geschlossene Ketten gebildet werden, deren Kettenglieder die seitlich abstehenden Vorsprünge tragen.

In einer besonders bevorzugten Ausführungsform haben die Arbeitsringe von einander verschiedene Durchmesser. Dies hat - unabhängig von der erfindungsgemäßen Gestaltung der Glattringe - den Vorteil, daß größere Bodenschollen, die von zwei benachbarten Arbeitsringen erfaßt werden, auf Grund der differenziellen Rotation der Arbeitsringe auseinander gerissen werden.

In einer besonders bevorzugten Ausführungsform bilden die Arbeitsringe jeweils ein Oval mit entlang ihres Umfangs variierendem Innendurchmesser.

Die Arbeitsringe weisen bevorzugt entlang ihres Umfangs eine gezahnte Innenkontur auf. Dies hat - unabhängig von der sonstigen Ausführungsform der Arbeitsringe - den Vorteil, daß insbesondere bei bindigen oder lehmartigen Böden ein Anhaften von Bodenresten in den Zwischenräumen zwischen den Glattringen vermieden wird.

Im folgenden werden Ausführungsbeispiele anhand der Zeichnung näher erläutert.

Es zeigen:
- Figur 1: eine perspektivische Ansicht einer Ackerwalze;
- Figur 2: die Ackerwalze nach Figur 1 in einer Frontansicht;
- Figur 3: einen axialen Schnitt durch eine Trägerwalze;
- Figur 4: eine perspektivische Ansicht einer Ackerwalze gemäß einer Ausführungsform der Erfindung;
- Figur 5: die Ackerwalze nach Figur 4 in einer Frontansicht;
- Figur 6: eine Stirnansicht eines ovalen Arbeitsringes der Ackerwalze nach Figur 4;
- Figur 7: ein einzelnes Segment des Arbeitsringes nach Figur 6.

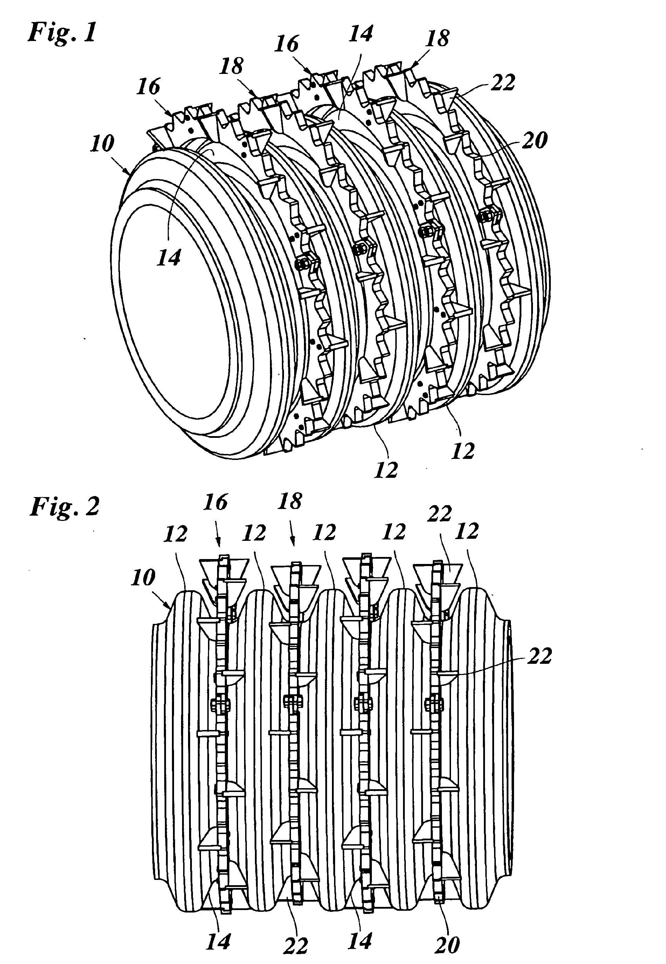

Die in Figur 1 gezeigte Ackerwalze weist eine durchgehende hohle Trägerwalze 10 auf, die auf ihrer Oberfläche eine regelmäßige Folge von umlaufenden Wülsten 12 mit dazwischen liegenden Tälern 14 bildet.

Auf der Trägerwalze 10 sind mehrere Arbeitsringe 16, 18 angeordnet, die jeweils in den Tälern 14 zwischen den Wülsten 12 liegen. Im gezeigten Beispiel sind zwei Sätze von Arbeitsringen 16, 18 vorgesehen, die sich in ihrem Durchmesser unterscheiden. Der Innendurchmesser der Arbeitsringe ist jedoch in jedem Falle kleiner als der Außendurchmesser der Wülste 12, so daß die Arbeitsringe formschlüssig zwischen den Wülsten gehalten sind. Andererseits ist der Innendurchmesser der Arbeitsringe größer als der Außendurchmesser der Arbeitswalze im Bereich der Täler 14, so daß die Arbeitsringe mit axialem Spiel auf der Trägerwalze sitzen. Der Außendurchmesser der Arbeitsringe 16, 18 ist größer als der Außendurchmesser der Trägerwalze 10 im Bereich der Wülste 12. Wenn die Ackerwalze auf dem Boden abrollt, ist daher die Geschwindigkeit der Arbeitsringe von der Geschwindigkeit der Trägerwalze verschieden.

Jeder Arbeitsring 16, 18 weist eine gezahnte Außenkontor 20 zur Zerkleinerung des Bodens auf und besitzt außerdem eine in Umfangsrichtung abwechselnde Folge von nach entgegengesetzten Seiten weisenden Vorsprüngen 22, deren Kontur etwa an das Profil der Täler 14 angepaßt ist, wie deutlicher in Figur 2 zu erkennen ist. Die Vorsprünge 22 sind jedoch so dimensioniert, daß die Arbeitsringe 16, 18 insgesamt mit axialem Spiel zwischen den Wülsten 12 liegen. Aufgrund ihres radialen Spiels lassen sich die Arbeitsringe allerdings so weit in die Täler 14 eindrücken, daß ihre Vorsprünge 22 formpassend in die Täler 14 eingreifen, wie im unteren Teil der Figur 2 zu erkennen ist. So können sie die Bodenreste von der Oberfläche der Trägerwalze 10 abstreifen. Bei den Arbeitsringen 18 mit kleinerem Durchmesser liegt dann auch die gezahnte Außenkontur 20 etwas gegenüber den Kämmen der Wülste 12 zurück, während bei den größeren Arbeitsringen 16 die Außenkontur zumindest im Bereich der Zahnspitzen ständig über die Wülste 12 übersteht.

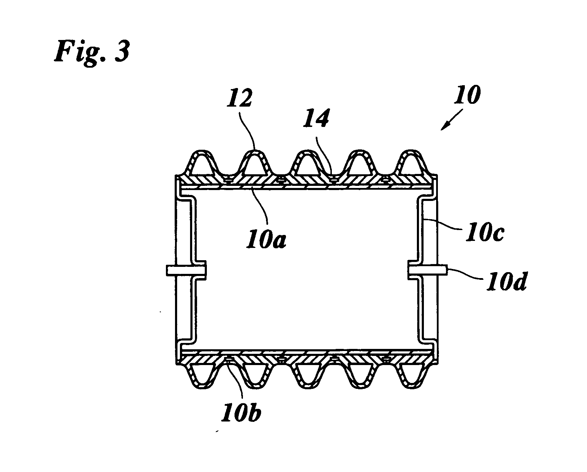

In Figur 3 ist der Aufbau der Trägerwalze 10 in einem axialen Schnitt dargestellt. Man erkennt, daß die Wülste 12 zur Gewichts- und Materialersparnis als hohle Profilelemente ausgebildet sind, die auf einem durchgehenden Stahlzylinder 10a sitzen und durch Verbindungsstifte 10b auf Stoß mit einander verbunden sind. Die offenen Enden der Arbeitswalze 10 werden durch Böden 10c verschlossen, an denen Achsstummel 10d zur Lagerung der Ackerwalze in einem nicht gezeigten Walzengestell angeordnet sind. Eine durchgehende Achse ist möglich aber nicht erforderlich. Durch die Böden 10c werden zugleich die durch die Profilelemente gebildeten Wülste 12 zusammengehalten, so daß sie eine duchgehende Oberfläche der Trägerwalze bilden.

Die Ausbildung der Wülste 12 als getrennte Profilelemente gestattet es wahlweise auch, die Arbeitsringe in einem Stück als geschlossene Ringe herzustellen und sie bei der Montage abwechselnd mit den Profilelementen auf den Stahlzylinder 10a aufzuschieben.

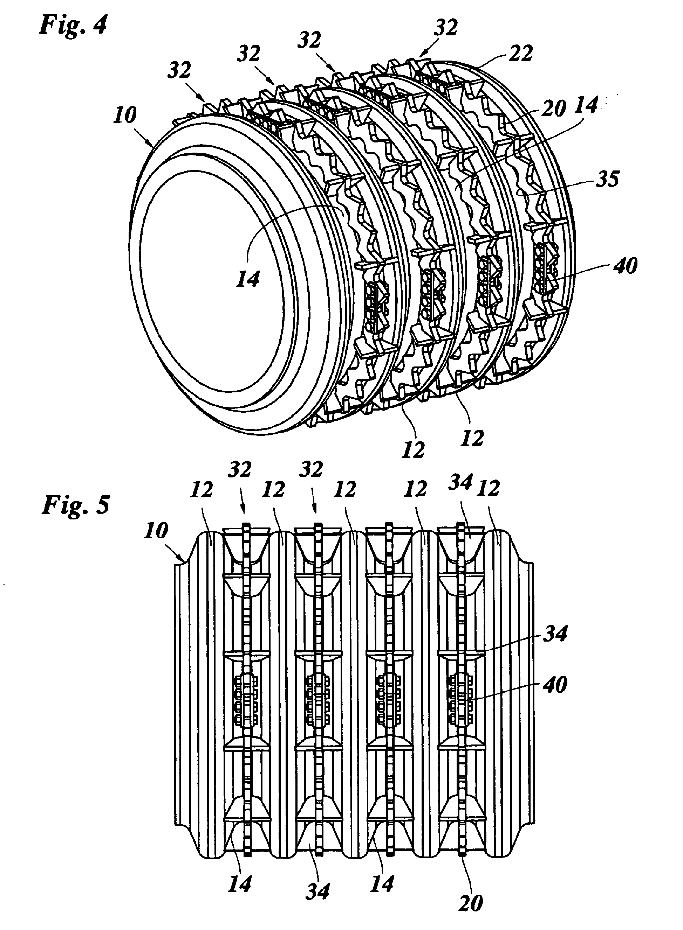

Die in Figuren 4 und 5 gezeigte Ausführungsform der Ackerwalze weist ebenfalls die Trägerwalze 10 auf, auf der mehrere ovale Arbeitsringe 32 angeordnet sind, die jeweils in den Tälern 14 zwischen den Wülsten 12 der Trägerwalze 10 liegen.

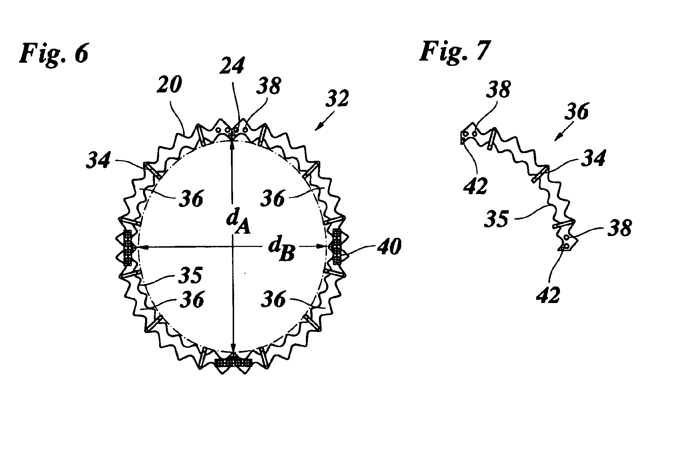

Figur 6 veranschaulicht den ovalen Aufbau eines Arbeitsringes 32. Der Arbeitsring 32 hat einen Innendurchmesser, der zwischen einem größeren Primär-Innendurchmesser d_{A} von beispielsweise 56 cm oder 54 cm und einem kleineren Sekundär-Innendurchmesser d_{B} von beispielsweise 48 cm variiert. Der Innendurchmesser der Arbeitsringe 32 ist jedoch in zumindest einer Richtung, wahlweise in jeder Richtung, kleiner als der Außendurchmesser der Wülste 12, so daß die Arbeitsringe 32 formschlüssig zwischen den Wülsten 12 gehalten sind. Dabei ist der Sekundär-Innendurchmesser der Arbeitsringe 32 größer als der Außendurchmesser der Arbeitswalze im Bereich der Täler 14, so daß die Arbeitsringe 32 mit axialem Spiel auf der Trägerwalze sitzen und in den Tälern 14 der Trägerwalze 10 umlaufen können. Der Außenumfang der Arbeitsringe 32 ist größer als der Außenumfang der Trägerwalze 10 im Bereich der Wülste 12. Wenn die Ackerwalze auf dem Boden abrollt, ist daher die Geschwindigkeit der Arbeitsringe 32 von der Geschwindigkeit der Trägerwalze 10 verschieden, und die Arbeitsringe 32 führen eine Rollbewegung aus, bei der sie abwechselnd mehr und weniger hoch aufragen.

Wie in den Figuren 4 und 6 zu erkennen ist, weist jeder Arbeitsring 32 eine gezahnte Außenkontur 20 zur Zerkleinerung des Bodens auf und besitzt dazu außerdem entlang seines Umfangs eine Folge von nach beiden Seiten zu den benachbarten Wülsten 12 weisenden Vorsprüngen 34, deren Kontur etwa an das Profil der Täler 14 angepaßt ist, wie deutlicher in Figur 5 zu erkennen ist. Die Vorsprünge 34 sind jedoch so dimensioniert, daß die Arbeitsringe 32 insgesamt mit axialem Spiel zwischen den Wülsten 12 liegen. Aufgrund ihres radialen Spiels lassen sich die Arbeitsringe jedoch an jedem Bereich ihres inneren Umfangs so weit in die Täler 14 eindrücken, daß ihre Vorsprünge 34 formpassend in die Täler 14 eingreifen, wie im unteren Teil der Figur 5 zu erkennen ist. So können sie die Bodenreste von der Oberfläche der Trägerwalze 10 abstreifen. Aufgrund ihrer nach beiden Seiten weisenden Vorsprünge sind die Arbeitsringe 32 besonders gut zwischen den Wülsten 12 geführt.

Zusätzlich weisen die Arbeitsringe 32 entlang ihres Umfangs eine gezahnte Innenkontur 35 auf, wie in Figuren 4 und 6 zu erkennen ist. Sie bewirkt ein Lockern und Ablösen von in den Boden der Täler 14 eingebrachten Bodenresten.

Der in Figur 6 gezeigte einzelne Arbeitsring 32 ist an Teilungsnähten 24 in vier Segmente 36 unterteilt.

In Figur 7 ist ein einzelnes Segment 36 gesondert dargestellt. Der ovale Arbeitsring 32 ist aus vier gleichen Segmenten 36 zusammengesetzt, die an den Teilungsnähten 24 auf Stoß zusammengefügt sind und an Schraubenlöchern 38 mit Verbindungsplatten 40 verschraubt sind, wie auch in Figuren 4 und 5 zu erkennen ist. An ihren Enden weisen die Segmente 36 jeweils Kennzeichnungen 42 auf, die das richtige Zusammenbauen der Segmente 36 zu einem ovalen Arbeitsring 32 erleichtern.

## Patentansprüche

1. Ackerwalze mit abwechselnd angeordneten Arbeitsringen (16, 18, 32) und Glattringen (12), bei der die Glattringe durch umlaufende Wülste (12) auf der Oberfläche einer durchgehenden Trägerwalze (10) gebildet werden und die Arbeitsringe in bezug auf die Glattringe mit radialem und axialem Spiel und frei drehbar angeordnet sind und einen vom Außendurchmesser der Glattringe verschiedenen Außendurchmesser aufweisen, **dadurch gekennzeichnet, daß** die Arbeitsringe (32) jeweils ein Oval bilden.

2. Ackerwalze nach Anspruch 1, **dadurch gekennzeichnet, daß** die Oberfläche der Trägerwalze (10) aus einem Polymermaterial besteht.

3. Ackerwalze nach Anspruch 2, **dadurch gekennzeichnet, daß** die Oberfläche der Trägerwalze (10) aus einem Gummimaterial besteht.

4. Ackerwalze nach einem der vorstehenden Ansprüche, **dadurch gekennzeichnet, daß** die Arbeitsringe (16, 18) jeweils an mindestens einer Stelle ihres Umfangs durch eine Teilungsnaht (24) geteilt sind.

5. Ackerwalze nach Anspruch 4, **dadurch gekennzeichnet, daß** die Arbeitsringe (16, 18, 32) jeweils aus mehreren Segmenten (26; 36) zusammengesetzt sind.

6. Ackerwalze nach einem der vorstehenden Ansprüche, **dadurch gekennzeichnet, daß** die Arbeitsringe (16, 18, 32) jeweils durch ein oder mehrere Spritzteile aus Kunststoff gebildet werden.

7. Ackerwalze nach Anspruch 6, **dadurch gekennzeichnet, daß** die Arbeitsringe (16, 18, 32) aus Polyamid bestehen.

8. Ackerwalze nach einem der vorstehenden Ansprüche, **dadurch gekennzeichnet, daß** die Arbeitsringe (16, 18, 32) voneinander verschiedene Durchmesser aufweisen.

9. Ackerwalze nach einem der vorstehenden Ansprüche, **dadurch gekennzeichnet, daß** die Wülste (12) als getrennte Profilelemente ausgebildet sind, die auf Stoß auf einem durchgehenden Zylinder (10a) sitzen und zusammen eine durchgehende Oberfläche der Trägerwalze (10) bilden.

10. Ackerwalze nach einem der vorstehenden Ansprüche, **dadurch gekennzeichnet, daß** die Arbeitsringe (16, 18, 32) jeweils eine Folge von abwechselnd nach entgegengesetzten Seiten weisenden Vorsprüngen (22) tragen, die in ihrer Kontur dem Profil von zwischen den Wülsten (12) der Trägerwalze (10) gebildeten Tälern (14) entsprechen.

11. Ackerwalze nach einem der vorstehenden Ansprüche, **dadurch gekennzeichnet, daß** die Arbeitsringe (16, 18, 32) jeweils eine Folge von nach beiden Seiten zu benachbarten Wülsten (12) der Trägerwalze (10) weisenden Vorsprüngen (34) tragen, die in ihrer Kontur dem Profil von zwischen den Wülsten (12) der Trägerwalze (10) gebildeten Tälern (14) entsprechen.

12. Ackerwalze nach Anspruch 11, **dadurch gekennzeichnet, daß** die Arbeitsringe (32) jeweils ein Oval mit entlang ihres Umfangs variierendem Innendurchmesser bilden.

13. Ackerwalze nach einem der vorstehenden Ansprüche, **dadurch gekennzeichnet, daß** die Arbeitsringe (16, 18, 32) entlang ihres Umfangs eine gezahnte Innenkontur (35) aufweisen.

## Claims

1. Field roller with alternately disposed working rings (16, 18, 32) and smooth rings (12), in which the smooth rings are formed by circumferential beads (12) on the surface of a continuous support roller (10), and the working rings are disposed with radial and axial clearance and so as to be freely rotatable in relation to the smooth rings and have an outside diameter which is different from the outside diameter of the smooth rings, **characterised in that** the working rings (32) in each case form an oval.

2. Field roller according to Claim 1, **characterised in that** the surface of the support roller (10) consists of a polymer material.

3. Field roller according to Claim 2, **characterised in that** the surface of the support roller (10) consists of a rubber material.

4. Field roller according to any one of the preceding Claims, **characterised in that** the working rings (16, 18) are in each case divided by a dividing seam (24) at least at one point of their circumference.

5. Field roller according to Claim 4, **characterised in that** the working rings (16, 18, 32) are in each case composed of a plurality of segments (26; 36).

6. Field roller according to any one of the preceding Claims, **characterised in that** the working rings (16, 18, 32) are in each case formed by one or a plurality of injection-moulded part(s) of plastics material.

7. Field roller according to Claim 6, **characterised in that** the working rings (16, 18, 32) consist of polyamide.

8. Field roller according to any one of the preceding Claims, **characterised in that** the working rings (16, 18, 32) have diameters which differ from one another.

9. Field roller according to any one of the preceding Claims, **characterised in that** the beads (12) are formed as separate profiled elements which are seated flush on a continuous cylinder (10a) and together form a continuous surface of the support roller (10).

10. Field roller according to any one of the preceding Claims, **characterised in that** the working rings (16, 18, 32) in each case bear a series of projections (22) which point alternately towards opposite sides and which correspond in their contour to the profile of troughs (14) formed between the beads (12) of the support roller (10).

11. Field roller according to any one of the preceding Claims, **characterised in that** the working rings (16, 18, 32) in each case bear a series of projections (34) which point towards both sides in the direction of adjacent beads (12) of the support roller (10) and which correspond in their contour to the profile of troughs (14) formed between the beads (12) of the support roller (10).

12. Field roller according to Claim 11, **characterised in that** the working rings (32) in each case form an oval with an inside diameter which varies along its circumference.

13. Field roller according to any one of the preceding Claims, **characterised in that** the working rings (16, 18, 32) have a toothed inner contour (35) along their circumference.

## Revendications

1. Rouleau agricole avec des disques de travail (16, 18, 32) et des disques lisses (12) disposés alternativement, dans lequel les disques lisses sont formés par des bourrelets (12) périphériques sur la surface d'un rouleau de support (10) continu, et les disques de travail sont disposés avec jeu radial et axial par rapport aux disques lisses, et de manière à pouvoir tourner librement, et présentent un diamètre extérieur différent du diamètre extérieur des disques lisses, **caractérisé en ce que** les disques de travail (32) forment chacun un ovale.

2. Rouleau agricole selon la revendication 1, **caractérisé en ce que** la surface du rouleau de support (10) est constituée d'un matériau polymère.

3. Rouleau agricole selon la revendication 2, **caractérisé en ce que** la surface du rouleau de support (10) est constituée d'un matériau de caoutchouc.

4. Rouleau agricole selon l'une quelconque des revendications précédentes, **caractérisé en ce que** les disques de travail (16, 18) sont divisés chacun en au moins un point de leur périphérie par un cordon de division (24).

5. Rouleau agricole selon la revendication 4, **caractérisé en ce que** les disques de travail (16, 18, 32) sont composés chacun de plusieurs segments (26 ; 36).

6. Rouleau agricole selon l'une quelconque des revendications précédentes, **caractérisé en ce que** les disques de travail (16, 18, 32) sont formés chacun d'un ou plusieurs éléments injectés en matière plastique.

7. Rouleau agricole selon la revendication 6, **caractérisé en ce que** les disques de travail (16, 18, 32) sont en polyamide.

8. Rouleau agricole selon l'une quelconque des revendications précédentes, **caractérisé en ce que** les disques de travail (16, 18, 32) présentent des diamètres différents les uns des autres.

9. Rouleau agricole selon l'une quelconque des revendications précédentes, **caractérisé en ce que** les bourrelets (12) sont réalisés sous la forme d'éléments profilés séparés qui reposent bout à bout sur un cylindre (10a) continu et forment ensemble une surface continue du rouleau de support (10).

10. Rouleau agricole selon l'une quelconque des revendications précédentes, **caractérisé en ce que** les disques de travail (16, 18, 32) portent chacun une succession de saillies (22) dirigées alternativement vers des côtés opposés dont le contour correspond au profil de creux (14) formés entre les bourrelets (12) du rouleau de support (10).

11. Rouleau agricole selon l'une quelconque des revendications précédentes, **caractérisé en ce que** les disques de travail (16, 18, 32) portent chacun une succession de saillies (34) dirigées vers les deux côtés de bourrelets (12) voisins du rouleau de support (10), dont le contour correspond au profil de creux (14) formés entre les bourrelets (12) du rouleau de support (10).

12. Rouleau agricole selon la revendication 11, **caractérisé en ce que** les disques de travail (32) forment chacun un ovale avec un diamètre intérieur variant le long de leur pourtour.

13. Rouleau agricole selon l'une quelconque des revendications précédentes, **caractérisé en ce que** les disques de travail (16, 18, 32) présentent un contour intérieur (35) denté le long de leur pourtour.
